# EUROPEAN PATENT SPECIFICATION

(11) **EP 0 569 379 B1**
(45) Date of publication and mention of the grant of the patent: **11.01.1995**
(21) Application number: 92901841.4
(22) Date of filing: 07.01.1992
(51) Int. Cl.: F02M 55/02

(54) **MOUNTING FUEL INJECTION SYSTEM COMPONENTS ON A FUEL RAIL**
MONTAGE VON BAUTEILEN EINES KRAFTSTOFFEINSPRITZSYSTEMS AN EINER KRAFTSTOFFVERTEILERLEITUNG
MONTAGE DE COMPOSANTS D'UN SYSTEME D'INJECTION DE CARBURANT SUR UNE RAMPE D'INJECTION

(30) Priority: 31.01.1991 US 648264; 25.07.1991 US 735554
(43) Date of publication of application: 18.11.1993
(73) Proprietor: SIEMENS AKTIENGESELLSCHAFT, 80333 München (DE)
(72) Inventor: IMOEHL, William, James, Williamsburg, VA 23188 (US); HORNBY, J., Michael, Williamsburg, VA 23185 (US)
(86) International application number: EP9200022
(87) International publication number: WO9214051

(56) References cited:
- EP-A- 0 193 098
- WO-A-90/03510
- DE-A- 2 926 490
- FR-A- 2 637 021
- US-A- 4 474 159

## Description

### Field of the Invention

This invention relates generally to fuel injection systems for internal combustion engines and in particular to the retention of devices such as fuel pressure regulators and fuel injectors on fuel rails and to the attachment of fuel tubes to fuel rails.

### Background and Summary of the Invention

Fuel rail assemblies for gasoline engines often comprise a metal fuel rail that contains the fuel injectors. Certain advantages may accrue by using a molded plastic part for the fuel rail. For example, a molded plastic fuel rail designed to accept bottom-feed fuel injectors can save on weight and provide for a reduction in the envelope that is occupied by the fuel rail assembly, and these are important considerations for automotive vehicle manufacturers. Furthermore, a single plastic fuel rail may provide certain savings over a metal fuel rail when the metal fuel rail is an assembly of individual metal pieces which must be joined in a fluid-tight manner by suitable joining processes.

Since a molded plastic fuel rail is essentially a tubular part, the mold for fabricating it typically comprises one or more core pins that must be extracted from the interior of the plastic after the plastic has solidified in the mold. In a mold in which a single core pin forms the main fuel rail hole the core pin is extracted by withdrawing it from one axial end of the fuel rail. Due to part and molding considerations the main fuel rail hole at this end of the fuel rail will typically be larger than the diameter of a metal fuel tube that is intended to be inserted into it to form a joint between the fuel tube and the fuel rail. A problem is therefore posed as to how to create such a joint in a manner that will be economical for production purposes, yet will also comply with relevant engineering specifications. The present invention is directed to a solution to this problem.

Various known types of clips or clamps for separably retaining a fuel injector or a pressure regulator in its installed position on a fuel rail are illustrated by: US-A-4 474 160; US-A-4 475 516; US-A-4 539 961; US-A-4 570 602; US-A-4 741 315; US-A-4 768 487; US-A-4 823 754; US-A-4 844 515; US-A-4 991 556; and US-A-5 002 030.

Other types of clips for joining tubes are shown in US-A-4 938 510; US-A-5 000 614; US-A-4 874 174; US-A-3 560 027; US-A-3 973 791; US-A-4 526 411; US-A-4 772 052; US-A-4 869 534; US-A-4 244 608; US-A-4 453 747 ; and DE-OS 1 425 470.

DE-A-2 926 490 discloses a device as described in the preamble of claim 1.

WO 90/03510 discloses a device as described by a portion of the preamble of claim 1.

The present invention enables a fuel tube, a fuel pressure regulator or a fuel injector to be facilely and expediently assembled to and separably retained on a fuel rail with the use of only a single additional part, namely a one-piece metal retention clip.

In one embodiment of the invention for attaching a fuel tube to a fuel rail, a tubular plug fits in a sealed manner to the end of the main fuel rail hole and receives the fuel tube in a sealed manner. A slot extends through the sidewall of the fuel rail to intersect the main fuel rail hole closely adjacent the end of the fuel rail. A tube retainer clip passes through the slot and comprises a U-shaped notch that allows the clip to slide over the metal fuel tube. The fuel tube has a circular exterior bead that is overlapped by the margin of the clip that borders the U-shaped notch such that the bead is disposed more interiorly of the fuel rail hole with the result that the metal fuel tube is captured and cannot be withdrawn from the main fuel rail hole unless the clip is first removed. Yet, the tube can still be rotated within the fuel rail while captured, and this attribute is useful in allowing for proper alignment when the fuel rail assembly is being installed on an engine. In the completed fuel rail assembly, the clip is itself retained in its fuel-tube-capturing position by a suitable retention means which may be either an integral clasp portion of the clip which snaps onto the fuel tube just beyond the end of the main fuel rail hole or an apertured tab that is integrally formed with the clip and through which a threaded fastener passes into a threaded hole in a boss on the fuel rail. When a fuel injector retainer is assembled onto the fuel rail for the purpose of retaining the injectors in their sockets in the rail, the installed tube retainer clip may be prevented from being removed by a portion of the fuel injector retainer being disposed in an interference relationship to the clip.

Principles of the invention can also be applied to join another fuel tube to the opposite end of the main fuel rail hole whenever the fuel rail has a complete through-hole for its main fuel hole. Typically a majority of the length of such a through-hole is created by a molding core pin which is extracted from one end of the solidified plastic, and the opposite open end of the fuel rail which is to receive the other fuel tube may be made sufficiently small that the use of a plug is unnecessary, in which case, the other fuel tube will fit in a sealed manner directly into the opposite end of the through-hole without such an intervening plug.

In another embodiment, a fuel pressure regulator is disposed in a socket in a fuel rail and retained therein by means of a one-piece metal retention clip which has a flat forked blade portion that is inserted through a slot in the socket sidewall to span the socket in overlying relation to a flange extending around the outside of the cylindrical body of the pressure regulator so as to capture the pressure regulator in the socket and which also has a resilient body-clasping portion in the form of a pair of opposing spring fingers that are cantilevered on and spaced axially of the flat forked blade portion by means of a joining portion of the clip and that come to resiliently embrace the body of the pressure regulator as the forked blade portion comes to span the socket. Such an attachment can also be used for retaining a fuel injector in its socket in a fuel rail.

Although US-A-4 938 510 shows a clip which has forked portions fitted respectively onto the tube and into slot structure in the part into which the tube end is inserted, the forked portions are disposed in parallel planes. In other words, the thicknesses of the respective forked portions run in the same direction, parallel to the coaxis of the tube and the hole in the part into which the tube end is inserted.

According to the present invention, the thickness of the forked portion of the clip that fits onto the tube is at ninety degrees to the thickness of the other forked portion that is received in slot structure in the part into which the tube end is inserted.

Further features, advantages and benefits of the invention, along with those already introduced, will be seen in the ensuing description and claims which should be considered along with the accompanying drawings. The drawings, in which like reference numerals designate like parts, disclose a preferred embodiment of the invention according to the best mode contemplated at the present time in carrying out the invention.

### Brief Description of the Drawings

Fig. 1 is a top plan view of a fuel rail assembly embodying principles of the invention, certain portions being broken away.

Fig. 2 is an enlarged view in circle 2 of Fig. 1.

Fig. 3 is an exploded perspective view of Fig. 2, including further detail, but with the fuel injector omitted.

Fig. 4 is an enlarged view in circle 5 in Fig. 1.

Fig. 5 is an enlarged view in circle 6 in Fig. 1.

Fig. 6 is a fragmentary view of a fuel rail in the vicinity of a socket for receiving a fuel pressure regulator.

Fig. 7 is a view, partly in section, in the direction of arrows 8-8 in Fig. 6.

Fig. 8 is a view like Fig. 7, but with the fuel pressure regulator having been disposed in the socket.

Fig. 9 is an end view which includes the retention clip installed.

Fig. 10 is a view in the direction of arrow 11 in Fig. 9.

Fig. 11 is a view in the direction of arrow 12 in Fig. 10.

Fig. 12 is a modified form of Fig. 9.

### Description of the Preferred Embodiment

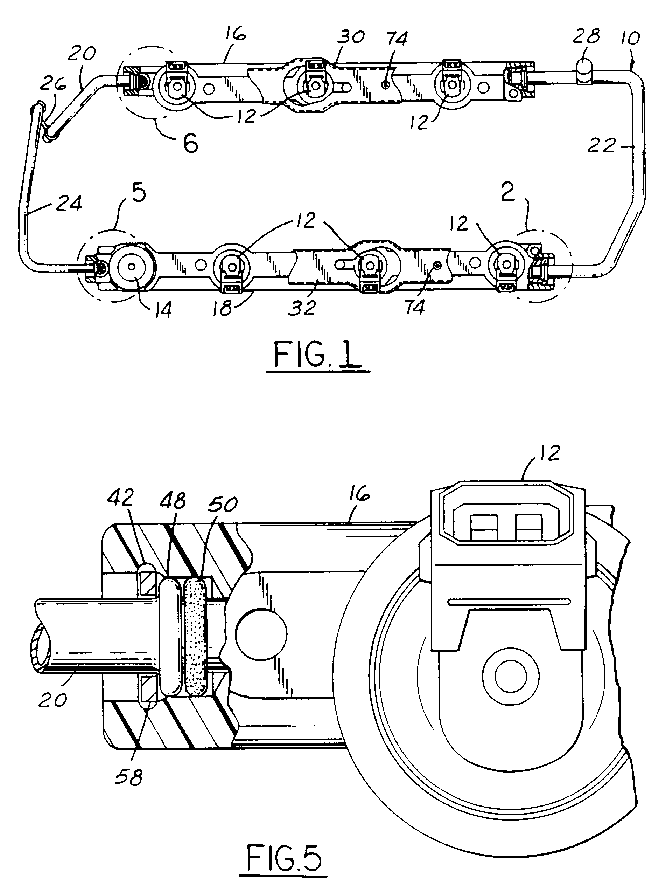

Fig. 1 presents an example of a fuel rail assembly 10 that embodies principles of the invention. The example is for a V-6 engine (not shown in the drawings) and contains six electromagnetic operated fuel injectors 12 of the bottom-feed type and a pressure regulator 14. Three of the injectors are mounted on one molded plastic fuel rail 16 for serving the three engine cylinders on one side of the engine, and the remaining three injectors and the pressure regulator are mounted on another molded plastic fuel rail 18 for serving the three engine cylinders on the other side of the engine. Assembly 10 further comprises a metal inlet tube 20, a metal cross-over tube 22, and a metal outlet tube 24. Inlet tube 20 is joined to the left-hand end of fuel rail 16, cross-over tube 22 joins with the right-hand ends of both fuel rails 16 and 18, and outlet tube 24 is joined to the left-hand end of fuel rail 18. A strap 26 is used for holding the free ends of tubes 20 and 24 in a desired relationship for connection of the fuel rail assembly with a fuel supply line and a fuel return line (not shown), and cross-over tube 22 contains a diagnostic fitting 28. Stamped metal retainers 30 and 32 generally overlie the respective plastic fuel rails 16 and 18 and are shown in an interference relationship with the fuel injectors that prevents the fuel injectors from being removed from the fuel rails until such time as the retainers are unfastened from the fuel rails and moved to a non-interference relationship.

This much of the Description represents known fuel rail assembly technology. The fuel circuit through the fuel rail assembly comprises in order: inlet tube 20, fuel rail 16, cross-over tube 22, fuel rail 18, and outlet tube 24. A pressure regulated supply of liquid fuel is thus made available to all injectors so that when each injector is energized, it injects fuel toward the corresponding engine cylinder. It is to be appreciated that the electrical wiring to the fuel injector electrical connectors is not shown in the drawings although the connectors themselves can be seen.

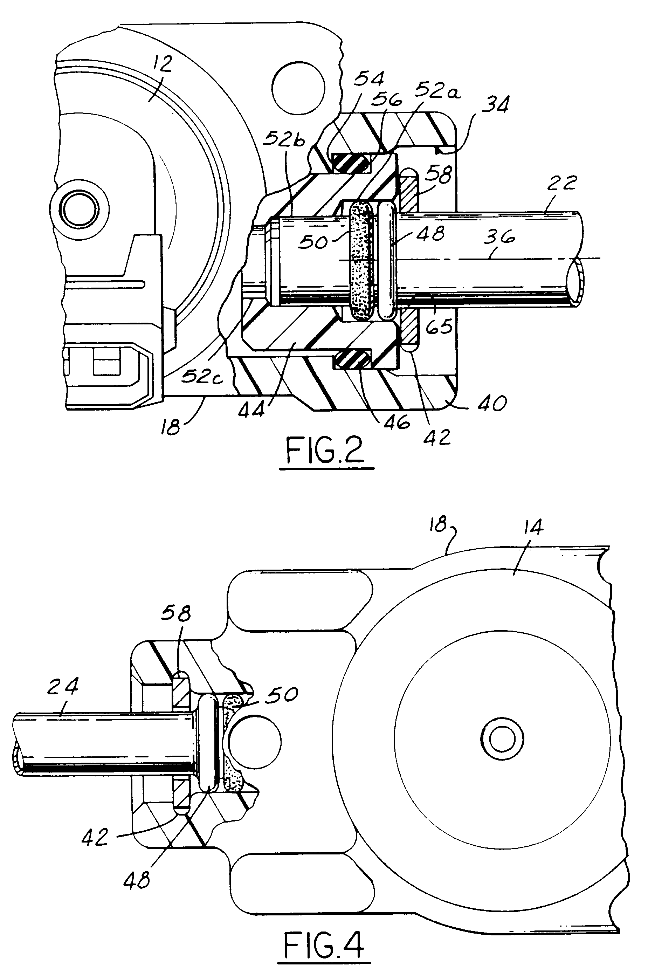

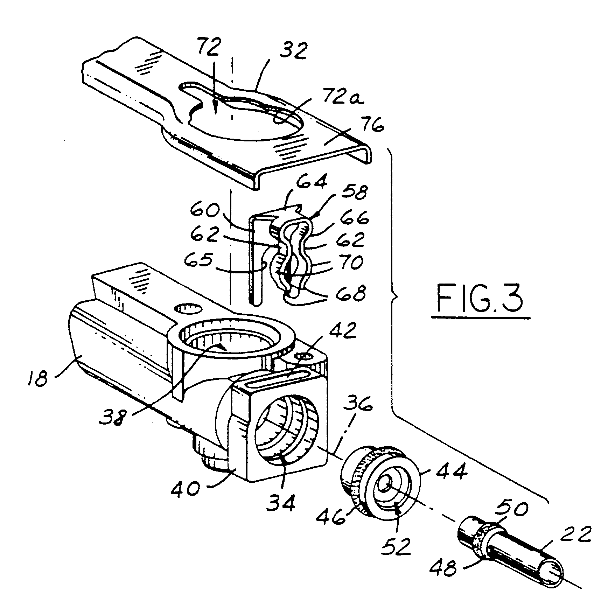

Figs. 2 and 3 illustrate details of the joint between fuel rail 18 and cross-over tube 22. The right-hand end of fuel rail 18 in Fig. 1 represents the end at which the mold core that was used to create the main fuel hole 34 in the fuel rail was withdrawn, and so this end of the hole is larger than the opposite end. The main axis of hole 34 is represented by the numeral 36. Fuel rail 18 contains three transverse sockets 38 within which the corresponding three fuel injectors are disposed. These sockets transversely intersect hole 34. The sidewall of the fuel rail has a generally square shaped portion 40 at the larger end of hole 34. A slot 42 is provided in the square shaped portion 40, extending from the rail's exterior to intersect hole 34.

The joint further includes a tubular plug 44 that is disposed within hole 34. An O-ring seal 46 is disposed on plug 44. The end of tube 22 that joins with rail 18 contains a circular bead, or flange, 48 spaced proximally of the terminus of the end, and an O-ring seal 50 is disposed on tube 22 immediately distally of bead 48. Plug 44 contains a through-hole 52 having successively smaller diameter segments 52a, 52b, 52c. Hole 34 and plug 44 have respective shoulders 54 and 56, which abut opposite axial ends of O-ring 46 such that the extent to which plug 44 can be inserted into hole 34 is thereby defined. The O-ring seal provides fluid-tight sealing of the plug to the fuel rail in conventional sealing manner.

The abutment of O-ring 50 with bead 48 serves to axially locate the O-ring on the tube. The extent to which the tube can be inserted into hole 52 of plug 44 is defined by the abutment of the terminus of the tube with an internal shoulder that exists between the segments 52b, 52c, and when the tube terminus is so abutted with that shoulder, O-ring 50 and bead 48 are disposed within segment 52a such that the bead is essentially flush with the surrounding axial end face of plug 44 . O-ring 50 provides fluid-tight sealing of the tube to the plug in conventional sealing fashion.

A tube retainer clip 58 serves to complete the joint. Clip 58 comprises a generally planar forked blade portion 60, a resilient retention clasp portion 62, and a joining portion 64 that joins portions 60 and 62. The forked blade portion has a U-shaped notch 65. The resilient retention clasp portion comprises juxtaposed curved fingers 66. Fig. 3 illustrates the position to which clip 58 is disposed preparatory to completing the joint after both plug 44 and tube 22 have been assembled to the fuel rail in the manner described above. Portion 60 is aligned for insertion into slot 42 to capture bead 48, and portion 62 is aligned to be snapped onto tube 22 exterior of rail 18. As the clip is moved downwardly from the position illustrated in Fig. 3, notch 65 allows portion 60 to slide over the tube such that bead 48 is overlapped by a margin of the clip that borders the U-shaped notch. Concurrent with the downward motion of the clip, the outwardly canted distal ends 68 of fingers 66 engage the sidewall of tube 22, and the resultant interaction increasingly spreads the two fingers apart until a point is reached where the distance between the fingers passes over a diameter of the tube, at which time the resiliency of the fingers causes then to contract onto the tube to place the curved portions 70 that are immediately proximal end portions 68 into embracement with the tube. With the curved portions 70 embracing tube 22, portion 60 is maximally inserted into slot 42 such that there is somewhat more than 180 degrees of overlap of the margin of notch 65 with bead 48. The result is that both tube 22 and plug 44 are captured on the fuel rail, and the tube cannot be separated from the rail until the clip is removed in the opposite manner from which it was assembled into the joint. Depending upon the depth of the throat of notch 65, slot 42 may extend partially into the opposite side of square-shaped portion 40, as shown in Fig. 2.

Both retainers 30 and 32 contain holes 72 through which the exterior portions of the fuel injectors pass. Fig. 1 shows the retainers in interference relationship with the injectors to prevent the injectors from being removed from their sockets 38. The retainers are fastened to the fuel rails by means of threaded fasteners 74 that pass through clearance holes in the retainers and into tapped inserts that are pressed into the plastic of the rail. With the retainers so fastened, an interfering portion 76 of the retainer 32 overlies clip 58 to prevent the clip from being removed from the joint to a point that would allow tube 22 to be disconnected from fuel rail 18. Thus, the clip cannot be removed until the retainer is itself unfastened and removed. Removal of the retainer is accomplished after its unfastening by shifting it to the left in Fig. 1 to register the larger portion 72a of each hole 72 with the corresponding injector and thereby allow the retainer to be lifted away from the fuel rail.

The joint between tube 22 and fuel rail 16 is like that of Figs. 2 and 3.

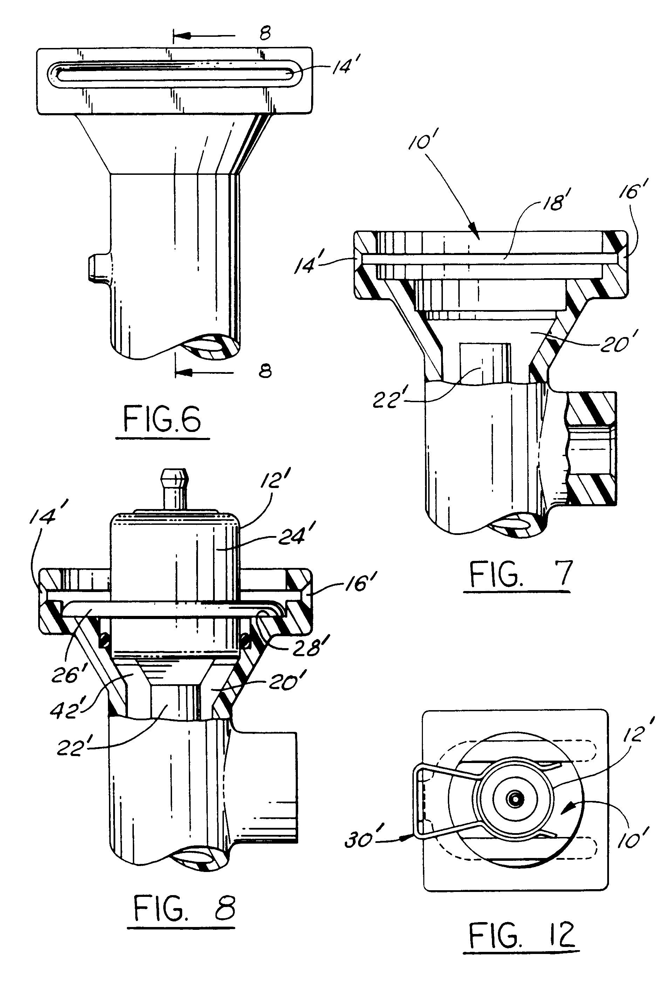

The joint between tube 24 and rail 18 is illustrated by Fig. 4. This joint is like the joint of Figs. 2 and 3 but does not use a plug 44 or O-ring seal 46 since this is the smaller end of the main fuel rail hole 34; rather, the tube end, including bead 48 and O-ring 50, is disposed directly in the fuel rail hole without an intervening plug.

The joint between tube 20 and fuel rail 16 is illustrated in Fig. 5 and is like that of Fig. 4 but involves a smaller diameter tube.

In those embodiments that use a plug 44, the plug may be a suitable plastic material. Preferably, the tube retention clips are fabricated from a suitable metallic material.

Figs. 6 and 7 show a fuel rail socket 10' having an open end for receiving a fuel pressure regulator 12' like that shown in the remaining Figs. Thin elongated slots 14', 16' are provided in opposite sides of the socket wall. Between the slots there are also grooves 18' in the opposite sides of the sidewall of the socket. The fuel rail contains an outer passage 20' that supplies fuel to the pressure regulator and an inner passage 22' that carries excess return fuel from the pressure regulator when the pressure regulator is disposed in the socket in the usual manner.

The pressure regulator has a cylindrical body 24' that is surrounded by a circular flange 26' that extends around the outside of the body. Flange 26' seats on a ledge 28' on the inside of the socket wall. In the Fig. 8 position, slots 14', 16' and grooves 18' just overlie flange 26'.

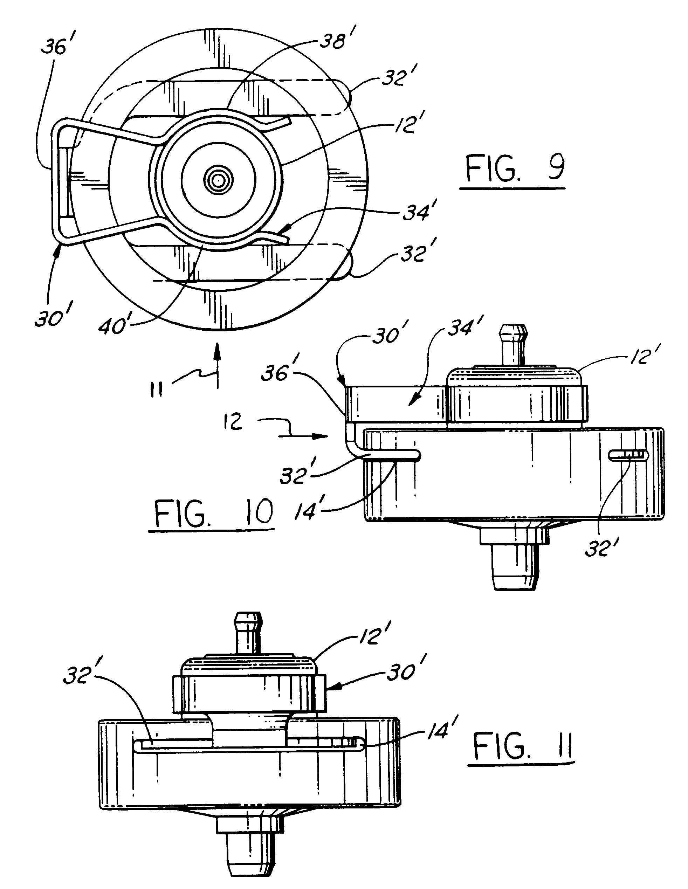

Figs. 9-11 show a one-piece metal retention clip 30' that retains the fuel pressure regulator in its installed position. The clip is fabricated from metal of generally uniform thickness by conventional forming techniques. Clip 30' comprises a thin flat forked blade portion 32' that is received in slots 14', 16' and laterally spans the socket between said slots in overlying relation to flange 26'. The clip further comprises a body-clasping portion 34' that is spaced from forked blade portion 32' in the direction axially of the socket and joins with the forked blade portion externally of the socket by means of a joining portion 36'. The body-clasping portion comprises resilient spring fingers 38', 40' cantilevered on joining portion 36' and engaging opposite sides of body 24' exterior to an ensealed zone 42' which contains liquid fuel passing through the fuel rail. In the fingers, the generally uniform thickness of the metal is disposed at ninety degrees to the generally uniform thickness of the metal in the forked blade portion.

After the pressure regulator has been installed into the socket as in Fig. 8, the free ends of the tines of the forked blade portion are aligned with one of the slots 14', 16', and the clip is then advanced radially. The tines of the forked blade portion pass through the interior of the socket in overlying relation to flange 26' and the shapes of the fingers 38', 40' allow them to first flex outwardly to fit over body 24', and as the clip approaches fully installed position, they resiliently relax to ultimately resiliently embrace the body in the fully installed position which is shown in Figs. 9-11. It can be seen that the tips of the fines protrude slightly beyond slot 16' in the fully installed position.

Fig. 12 shows a modified form which is like that already described with the exception that the outside of the socket has a square shape rather than the round shape shown in Fig. 9.

## Claims

1. An internal combustion engine fuel rail assembly comprising a fuel rail having a hole (34) or socket (10') in which is received a particular device (22;12') selected from the group of devices consisting of fuel tubes, fuel injectors and fuel pressure regulators, such devices having cylindrically shaped bodies that are circumferentially bounded by flange means (48; 26') extending around and radially outwardly of said bodies and that cooperatively define with said hole or socket an ensealed zone that contains liquid fuel passing through the fuel rail, and a one-piece clip (58;30') having generally uniform thickness that separably mounts on said fuel rail and that when mounted on the fuel rail with said particular device received in said hole or socket serves to prevent said particular device from being removed from said hole or socket, said fuel rail comprising thin elongate slots (42;14',16') on opposite sides of said hole or socket that are exterior to said ensealed zone, and said clip comprising a forked blade portion (60;32') that is received in said slots and laterally spans said hole or socket between said slots in overlying relation to said flange means, characterized further in that said clip further comprises a body-clasping portion (62;34') that is spaced from said forked blade portion in the direction axially of said hole or socket and joins with said forked blade portion externally of said hole or socket by means of a joining portion (64;36'), said body-clasping portion comprising resilient spring fingers (66;38',40') cantilevered on said joining portion and engaging opposite sides of said body exterior to said ensealed zone, and characterized further in that in said fingers said generally uniform thickness is disposed at ninety degrees to said generally uniform thickness in said forked blade portion.

2. An internal combustion engine fuel rail assembly as set forth in claim 1 characterized further in that said device is a fuel pressure regulator (12').

3. An internal combustion engine fuel rail assembly as set forth in claim 1 characterized further in that said particular device is a fuel tube (22) which has an open end adjacent which said flange means (48) is disposed on said tube, and said fuel rail assembly further having a fluid-tight joint which joins said open end of said tube with a hole (34) in said fuel rail such that said fuel rail hole and said tube form a fluid path through which liquid fuel is conveyed, said open end of said fuel rail hole is larger than said open end of said tube, said open end of said tube is disposed within said open end of said fuel rail hole, sealing means (44,46,50) seals between said open end of said fuel rail hole and said open end of said tube, said flange (48) means comprises a flange which extends externally circumferentially around said tube and which is disposed within said open end of said fuel rail hole, and said clip keeps said open end of said tube within said open end of said fuel rail hole.

4. An internal combustion engine fuel rail assembly as set forth in claim 3 further including a fuel injector retainer (32) that is separably attached to said fuel rail to retain fuel injectors in sockets of said fuel rail, said fuel injector retainer comprising an interfering portion that is disposed in interference relationship with said clip such that said blade portion (60) cannot be removed from interference with said tube's flange (48) unless said fuel injector retainer is released from its fuel-injector-retaining position.

5. An internal combustion engine fuel rail assembly as set forth in claim 3 in which said blade portion comprises a U-shaped notch (65) that endows the blade portion with a forked shaped that fits over said tube.

6. An internal combustion engine fuel rail assembly as set forth in claim 5 in which said tube's flange (48) extends completely around said tube and the interference of said blade portion (60) with said flange comprises somewhat more than 180 degrees of overlap of the margin of said notch (65) with said flange.

7. An internal combustion engine fuel rail assembly as set forth in claim 3 in which said sealing means comprises a tubular plug (44) that is disposed between said tube and said fuel rail hole, an O-ring seal (50) between said plug and said tube, and another O-ring seal (46) between said plug and said fuel rail hole.

## Patentansprüche

1. Kraftstoffverteilerleitungseinheit für eine Brennkraftmaschine mit einer Kraftstoffverteilerleitung mit einem Loch (34) oder einer Fassung (10'), in dem bzw. der eine spezielle Vorrichtung (22; 12') angeordnet ist, die aus der Gruppe von Vorrichtungen ausgewählt ist, die aus Kraftstoffrohren, Kraftstoffeinspritzvorrichtungen und Kraftstoffdruckreglern besteht, wobei diese Vorrichtungen zylindrisch geformte Körper besitzen, die durch Flanscheinrichtungen (48; 26') in Umfangsrichtung begrenzt sind, welche sich um die Körper herum und radial außerhalb derselben erstrecken, und die zusammen mit dem Loch oder der Fassung eine abgedichtete Zone bilden, die flüssigen Kraftstoff enthält, der durch die Kraftstoffverteilerleitung fließt, und einer einstückigen Klammer (58; 30'), die eine allgemein gleichmäßige Dicke besitzt und getrennt an der Kraftstoffverteilerleitung montiert ist sowie im zusammen mit der speziellen Vorrichtung, die in dem Loch oder der Fassung angeordnet ist, an der Kraftstoffverteilerleitung montierten Zustand dazu dient, eine Entfernung der speziellen Vorrichtung aus dem Loch oder der Fassung zu verhindern, wobei die Kraftstoffverteilerleitung dünne längliche Schlitze (42; 14', 16') auf gegenüberliegenden Seiten des Lochs oder der Fassung aufweist, die außerhalb der abgedichteten Zone liegen, und die Klammer einen gegabelten messerförmigen Abschnitt (60; 32') besitzt, der in den Schlitzen angeordnet ist und in seitlicher Richtung das Loch oder die Fassung zwischen den Schlitzen in überlagernder Beziehung Zu den Flanscheinrichtungen überspannt, dadurch gekennzeichnet, daß die Klammer des weiteren einen Körperklemmabschnitt (62; 34') aufweist, der in Axialrichtung des Lochs oder der Fassung vom gegabelten messerförmigen Abschnitt beabstandet ist und über einen Verbindungsabschnitt (64; 36') mit dem gegabelten messerförmigen Abschnitt außerhalb des Lochs oder der Fassung verbunden ist, wobei der Körperklemmabschnitt elastische Federfinger (66; 38'; 40') aufweist, die freikragend am Verbindungsabschnitt angeordnet sind und mit gegenüberliegenden Seiten des Körpers außerhalb der abgedichteten Zone in Eingriff stehen, und daß sich die allgemein gleichmäßige Dicke der Finger unter 90° zur allgemein gleichmäßigen Dicke des gegabelten messerförmigen Abschnitts erstreckt.

2. Kraftstoffverteilerleitungseinheit nach Anspruch 1, dadurch gekennzeichnet, daß die Vorrichtung ein Kraftstoffdruckregler (12')ist.

3. Kraftstoffverteilerleitungseinheit nach Anspruch 1, dadurch gekennzeichnet, daß die spezielle Vorrichtung ein Kraftstoffrohr (22) ist, das ein offenes Ende aufweist, benachbart zu dem die Flanscheinrichtungen (48) am Rohr angeordnet sind, und daß die Kraftstoffverteilerleitungseinheit des weiteren eine strömungsmitteldichte Verbindung besitzt, die das offene Ende des Rohres derart mit einem Loch (34) in der Kraftstoffverteilerleitung verbindet, daß das Loch der Kraftstoffverteilerleitung und das Rohr eine Strömungsmittelbahn bilden, über die flüssiger Kraftstoff gefördert wird, wobei das offene Ende des Lochs der Kraftstoffverteilerleitung größer ist als das offene Ende des Rohres, das offene Ende des Rohres innerhalb des offenen Endes des Lochs der KraftstoffverteilerLeitung angeordnet ist, Dichtungseinrichtungen (44; 46, 50) eine Abdichtung zwischen dem offenen Ende des Lochs der Kraftstoffverteilerleitung und dem offenen Ende des Rohres bewirken, die Flanscheinrichtungen (48) einen Flansch umfassen, der sich außen in Umfangsrichtung um das Rohr erstreckt und im offenen Ende des Lochs der Kraftstoffverteilerleitung angeordnet ist, und die Klammer das offene Ende des Rohres innerhalb des offenen Endes des Lochs der Kraftstoffverteilerleitung hält.

4. Kraftstoffverteilerleitungseinheit nach Anspruch 3, dadurch gekennzeichnet, daß sie des weiteren einen Kraftstoffeinspritzvorrichtungshalter (32) umfaßt, der getrennt an der Kraftstoffverteilerleitung befestigt ist, um Kraftstoffeinspritzvorrichtungen in Fassungen der Kraftstoffverteilerleitung zu halten, wobei der Kraftstoffeinspritzvorrichtungshalter einen Abschnitt besitzt, der im Festsitz mit der Klammer angeordnet ist, so daß der messerförmige Abschnitt (60) nicht aus dem Festsitz mit dem Flansch (48) des Rohres entfernt werden kann, bis der Kraftstoffeinspritzvorrichtungshalter aus einer Halteposition für die Kraftstoffeinspritzvorrichtung gelöst worden ist.

5. Kraftstoffverteilerleitungseinheit nach Anspruch 3, bei der der messerförmige Abschnitt eine U-förmige Einkerbung (65) besitzt, die den messerförmigen Abschnitt mit einer gegabelten Form versieht, die über das Rohr gepaßt ist.

6. Kraftstoffverteilerleitungseinheit nach Anspruch 5, bei der sich der Flansch (48) des Rohres vollständig um das Rohr erstreckt und der Festsitz zwischen dem messerförmigen Abschnitt (60) und dem Flansch eine Überlappung des Randes der Einkerbung (65) mit dem Flansch über etwas mehr als 180° umfaßt.

7. Kraftstoffverteilerleitungseinheit nach Anspruch 3, bei der die Dichtungseinrichtungen einen rohrförmigen Zapfen (44), der zwischen dem Rohr und dem Loch der Kraftstoffverteilerleitung angeordnet ist, eine O-Ring-Dichtung (50) zwischen dem Zapfen und dem Rohr und eine weitere O-Ring-Dichtung (46) zwischen dem Zapfen und dem Loch der Kraftstoffverteilerleitung umfassen.

## Revendications

1. Une structure de rampe d'injection de carburant pour un moteur à combustion interne comprenant une rampe d'injection de carburant ayant un trou (34) ou un réceptacle (10') dans lequel est reçu un dispositif particulier (22; 12') sélectionné dans le groupe de dispositifs comprenant des tubes de carburant, des injecteurs de carburant et des régulateurs de pression de carburant, de tels dispositif ayant des corps de forme cylindrique dont la circonférence est entourée par une structure de collet (48; 26') s'étendant autour de ces corps et vers l'extérieur en direction radiale, et qui définissent en coopération avec le trou ou le réceptacle une zone étanche qui contient un carburant liquide passant à travers la rampe d'injection de carburant, et une agrafe en une seule pièce (58; 30') ayant de façon générale une épaisseur uniforme, qui se monte de façon amovible sur la rampe d'injection de carburant et qui, lorsqu'elle est montée sur la rampe d'injection de carburant avec le dispositif particulier reçu dans le trou ou le réceptacle, a pour fonction d'empêcher que ce dispositif particulier ne soit retiré du trou ou du réceptacle, cette rampe d'injection de carburant comprenant des rainures fines allongées (42; 14'; 16') de part et d'autre du trou ou du réceptacle, qui sont extérieures à la zone étanche, et cette agrafe comprend une partie de lame fourchue (60; 32') qui est reçue dans les rainures et qui s'étend latéralement sur l'étendue du trou ou du réceptacle, entre les rainures, en recouvrant la structure de collet, caractérisée en outre en ce que l'agrafe comprend également une partie enserrant le corps (62; 34') qui est à distance de la partie de lame fourchue dans la direction axiale du trou ou du réceptacle, et qui est jointe à la partie de lame fourchue à l'extérieur du trou ou du réceptacle, au moyen d'une partie de jonction (64; 36'), cette partie enserrant le corps comprenant des doigts de ressort élastiques (66; 38', 40') qui sont montés en porte-à-faux sur la partie de jonction et qui viennent en contact avec des côtés opposés du corps à l'extérieur de la zone étanche, et caractérisée en outre en ce que dans ces doigts, l'épaisseur générale uniforme est disposée à quatre-vingt-dix degrés par rapport à l'épaisseur générale uniforme dans la partie de lame fourchue.

2. Une structure de rampe d'injection de carburant pour un moteur à combustion interne selon la revendication 1, caractérisée en outre en ce que le dispositif précité est un régulateur de pression de carburant (12').

3. Une structure de rampe d'injection de carburant pour un moteur à combustion interne selon la revendication 1, caractérisée en outre en ce que le dispositif particulier est un tube de carburant (22) qui a une extrémité ouverte, avec la structure de collet (48) disposée sur le tube en position adjacente à cette extrémité ouverte, et la structure de rampe d'injection de carburant comprenant en outre un joint étanche pour les fluides qui joint l'extrémité ouverte précitée du tube à un trou (34) dans la rampe d'injection de carburant, de façon que le trou de la rampe d'injection de carburant et le tube forment un chemin de fluide à travers lequel du carburant liquide est acheminé, l'extrémité ouverte précitée du trou de la rampe d'injection de carburant est plus grande que l'extrémité ouverte du tube, l'extrémité ouverte du tube est disposée à l'intérieur de l'extrémité ouverte du trou de la rampe d'injection de carburant, des moyens d'étanchéité (44, 46, 50) établissent l'étanchéité entre l'extrémité ouverte du trou de la rampe d'injection de carburant et l'extrémité ouverte du tube, la structure de collet (48) comprend un collet qui entoure le tube extérieurement et circonférentiellement et qui est disposé à l'intérieur de l'extrémité ouverte du trou de la rampe d'injection de carburant, et l'agrafe maintient l'extrémité ouverte du tube à l'intérieur de l'extrémité ouverte du trou de la rampe d'injection de carburant.

4. Une structure de rampe d'injection de carburant pour un moteur à combustion interne selon la revendication 3, comprenant en outre un dispositif de retenue d'injecteur de carburant (32) qui est fixé de façon amovible à la rampe d'injection de carburant, pour retenir des injecteurs de carburant dans des réceptacles de la rampe d'injection de carburant, ce dispositif de retenue d'injecteur de carburant comprenant une partie d'interaction qui est mise en relation avec l'agrafe, de façon que la partie de lame (60) ne puisse pas être retirée de la situation d'interaction avec le collet (48) du tube, à moins que le dispositif de retenue d'injecteur de carburant ne soit retiré de sa position de retenue d'injecteur de carburant.

5. Une structure de rampe d'injection de carburant pour un moteur à combustion interne selon la revendication 3, dans laquelle la partie de lame comprend une encoche en forme de U (65) qui donne à la partie de lame une forme fourchue qui s'ajuste sur le tube.

6. Une structure de rampe d'injection de carburant pour un moteur à combustion interne selon la revendication 5, dans laquelle le collet (48) du tube s'étend complètement autour du tube et l'interaction de la partie de lame (60) avec le collet s'étend sur un peu plus de 180° de chevauchement entre le bord de l'encoche (65) et le collet.

7. Une structure de rampe d'injection de carburant pour un moteur à combustion interne selon la revendication 3, dans laquelle les moyens d'étanchéité comprennent un bouchon tubulaire (44) qui est disposé entre le tube et le trou de la rampe d'injection de carburant, un joint d'étanchéité torique (50) entre ce bouchon et le tube, et un autre joint d'étanchéité torique (46) entre le bouchon et le trou de la rampe d'injection de carburant.
